Europäisches Patentamt

(19) European Patent Office (11) Publication number: **0 043 115**

Office européen des brevets **B1**

(12) **EUROPEAN PATENT SPECIFICATION**

(45) Date of publication of patent specification: **23.10.85** (51) Int. Cl.⁴: **B 60 R 22/26**

(21) Application number: **81104938.6**

(22) Date of filing: **25.06.81**

(54) **Seat belt device for an automotive vehicle.**

(30) Priority: **26.06.80 JP 90157/80**

(43) Date of publication of application:
**06.01.82 Bulletin 82/01**

(45) Publication of the grant of the patent:
**23.10.85 Bulletin 85/43**

(84) Designated Contracting States:
**DE FR GB**

(56) References cited:
**EP-A-0 030 779**
**DE-B-2 142 020**
**DE-B-2 330 210**
**JP-A-52 038 832**
**US-A-3 248 148**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Matsuoka, Hideoki**
**3726-10, Kamariya-cho Kanazawa-ku**
**Yokohama-shi Kanagawa-ken (JP)**

(74) Representative: **Patentanwälte TER MEER -**
**MÜLLER - STEINMEISTER**
**Mauerkircherstrasse 45**
**D-8000 München 80 (DE)**

## Description

The present invention relates to an automotive vehicle seat provided with a seat belt device comprising a seat belt for protecting a driver or a passenger from injury caused by a shock, a retractor for pulling said seat belt thereinto when said seat belt is not used, said retractor being arranged inside of the contour of a seat frame of a seat, and a seat belt guide member for guiding said seat belt reeled out of said retractor so as to be brought into contact with the body of the occupant under appropriate tension.

The background of the present invention will be explained with respect to its application to the seat belt device used with an automotive vehicle.

As is well-known, there are various safety seat belt devices used in automotive vehicles so as to protect a driver or passengers seated within the passenger compartment from injury caused by shock when the vehicle is suddenly decelerated, in an emergency situation such as a collision. Normally, the seat belt can be reeled out easily from a retractor by the driver or passenger and is pulled toward the retractor so that the seat belt may be brought into contact with the body of the occupant under appropriate tension. In the case where an automatic locking retractor is provided for the seat belt device, the seat belt is locked or stopped from being further reeled out from the retractor in case an ordinary shock is delivered to the retractor. This is because an inertia-sensitive sensor can detect the shock and lock the seat belt so that the seat belt can be prevented from being further reeled out from the retractor. In a prior-art seat belt device described in the Japanese Utility Model JP—A—5 238 832, the retractor is arranged inside of the contour of the seat frame near a rear corner of the seat, and the guide member arranged at the same corner of the seat. The seat belt is reeled out in a substantially vertical direction, and consequently, the retractor has its axis arranged in a horizontal direction. In this position, the retractor requires a comparatively large portion of the area of the seat cushion. Thus, there may arise a problem that the seat cushion or the seat spring, where it is depressed by the weight of the occupant, comes into contact with the retractor, so that the occupant feels uncomfortable. In order to avoid this problem, the retractor must be arranged in a comparatively low position so that it projects downwardly from the lower surface of the seat. This however has the consequence that the retractor occupies space under the seat and the passenger taking the rear seat cannot stretch his legs freely under the front seat.

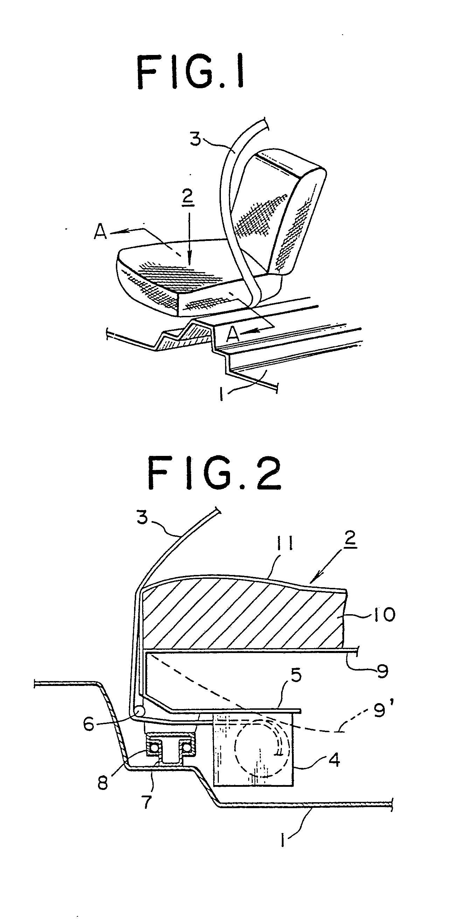

Similar problems are encountered in case of another prior-art seat belt device where the retractor is placed under almost the center of the seat. This prior art arrangement will be described in detail hereinafter with reference to figures 1 and 2.

The DE—B—2 142 020 discloses a seat belt device wherein the retractor and the belt guide member are arranged near opposite rear corners of the seat. In this case, the retractor is placed behind the rear edge of the seat or outside of a lateral edge thereof. Thus, there still is a problem that the retractor may interfere with the feet or legs of an occupant of the rear seat or with other parts of the vehicle.

With these problems in mind, it is the primary object of the present invention to provide an automotive vehicle seat having a seat belt device such that the bottom of the seat cushion does not interfere with the retractor and additionally enough space is formed under the seat so that the passenger taking the rear seat can freely stretch his legs thereunder.

To achieve the above-mentioned object, the automotive vehicle seat according to the present invention is characterized in that said retractor is housed near a lower, front middle-side corner of the seat frame, and that said belt guide member is formed near another front or middle-side corner of the seat frame.

The features and advantages of the seat belt device according to the present invention will be more clearly appreciated from the following description taken in conjunction with the accompanying drawings in which like reference numerals designate corresponding elements and in which;

Fig. 1 is a perspective pictorial view of a seat provided with a prior-art seat belt;

Fig. 2 is an enlarged cross-sectional view of Fig. 1, taken along the lines A—A;

Fig. 3 is a perspective pictorial view of a seat provided with a first embodiment of the seat belt device according to the present invention;

Fig. 4 is an enlarged fragmentary plan view of a seat frame used with the first embodiment of the seat belt device according to the present invention of Fig. 3;

Fig. 5 is a side view seen from the lines B—B of Fig. 4;

Fig. 6 is an enlarged fragmentary plan view of a seat frame used with a second embodiment of the seat belt device according to the present invention; and

Fig. 7 is a cross-sectional view of Fig. 6, taken along the lines C—C.

To facilitate understanding of the present invention, a brief reference will be made to a prior-art seat belt device, with reference to the attached drawings.

Figs. 1 and 2 show a seat provided with a sample prior-art seat belt device including a retractor fixed under the seat.

In the figures, the reference numeral 1 denotes the floor of the vehicle body, the numeral 2 denotes a seat cushion slidable frontward or backward, and the numeral 3 denotes a belt.

A retractor 4 to pull one end of the belt 3 thereinto is disposed within a frame 5 provided under the seat cushion 2, as depicted in Fig. 2, and the belt 3 is reeled out upward over the seat through a guide member 6. The numeral 7 denotes a lower seat-sliding rail fixed on the floor 1, the numeral 8 denotes an upper seat-sliding rail fixed to the seat, the numeral 9 denotes a seat spring arranged under the seat cushion 2, the numeral 10 denotes a pad placed on the spring 9, and the numeral 11 denotes a trim cover.

In this prior-art seat belt device, however, since the retractor 4 is placed under almost the center of the seat cushion 2, in the case of a car model where it is difficult to have enough clearance between the floor 1 and the seat spring 9, there is a problem in that the driver or the passenger is not comfortable when the seat spring 9 is brought into contact with the retractor 4 as shown by the dashed line 9' in Fig. 2.

In addition to the above shortcomings, there is another shortcoming such that since the retractor 4 occupies the space under the center of the seat cushion 2, the space between the floor 1 and the seat spring 9 is reduced and therefore it is impossible for the passenger taking the rear seat to stretch out his legs freely under the front seat.

In view of the above description, reference is now made to a first embodiment of the seat belt device according to the present invention.

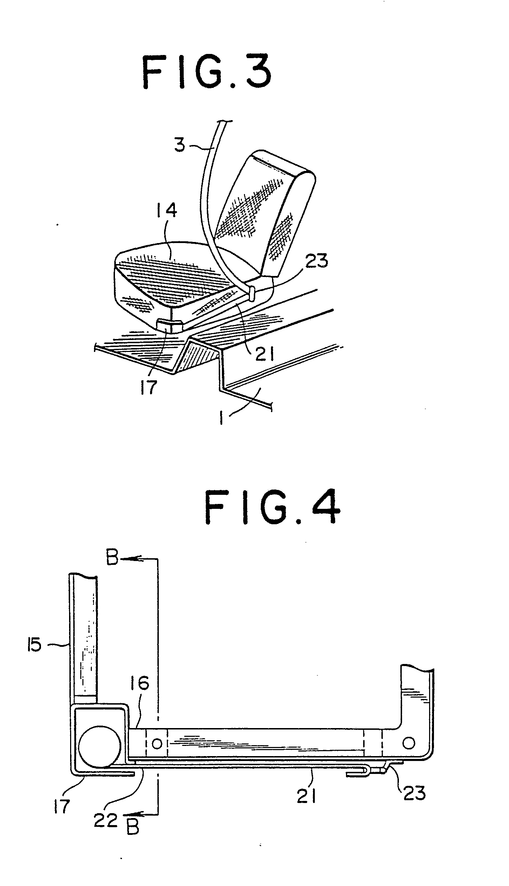

Fig. 3 shows a seat provided with a first embodiment. In this embodiment, a retractor 17 is disposed near the lower, front, middle-side (with respect to the passenger compartment) corner of a seat cushion 14.

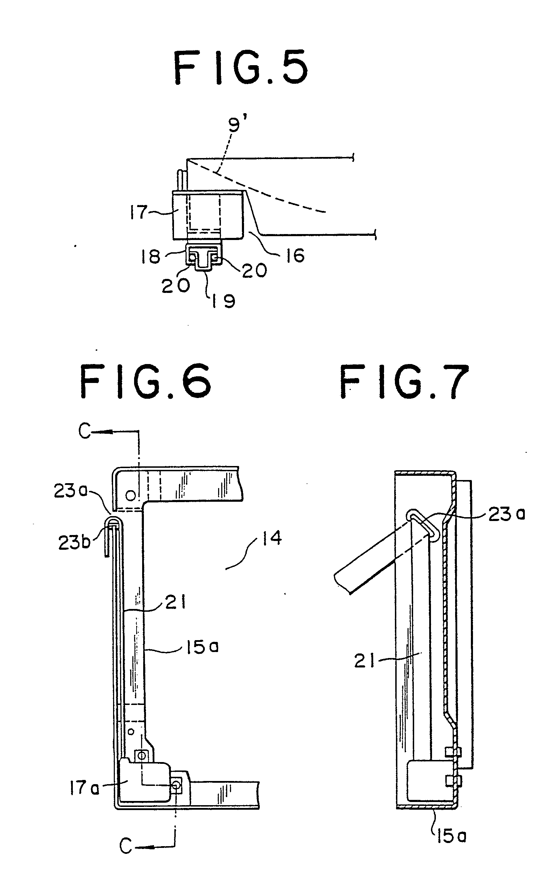

That is to say, as shown in Fig. 4, an unoccupied space 16 is formed near the front, middle-side corner of the seat frame 15 to mount the seat cushion 14, and a retractor 17 is fixed in this space 16. The upper rail 18 of Fig. 5 is fixed to the bottom surface of the retractor 17 under the frame 15 on the middle side of the passenger compartment. In this embodiment, the numeral 19 denotes a lower rail fixed on the floor 1, and the numeral 20 denotes two balls disposed between the upper rail 18 and the floor rail 19.

As depicted in Fig. 4, an opening 22 from which to reel the belt 21 out from the retractor 17 is provided facing rearward, and the seat belt 21 also extends rearward along the side surface of the frame 15 toward the center of the passenger compartment. At the rear part of the frame 15, a belt guide member 23 with a guide slot 23a is fixed on the side toward the center of the passenger compartment to guide the belt 21 upward as shown in Fig. 3.

In the seat belt device thus constructed, since the seat spring 9 is not brought into contact with the retractor 17, as shown by the dashed line 9' in Fig. 5, even if the seat spring 9 deforms downward when the driver or passenger sits down on the seat cushion 14, the driver can take the seat comfortably without feeling the presence of the retractor 17, and additionally since the seat belt 21 extends along the middle-side surface of the frame 15, it is possible to reel the belt out from or pull it into the retractor without interfering with the seat spring 9. Further, since there is enough space under the center of the frame 15, it is possible for the passenger taking the rear seat to stretch his legs out freely under the front seat.

Figs. 6 and 7 show a second embodiment of the seat belt device according to the present invention.

In this embodiment, the retractor 17a is disposed near the lower, front, middle-side corner of the seat frame 15a on which the seat cushion 14 is mounted, a skew guide slot 23a to guide the seat belt 21 is provided on the front, outer side of the seat frame, and another slot-shaped grommet-type guide member 23b to prevent the belt from being displaced from the seat frame is attached covering the guide slot 23a therewith. In this embodiment, it would be preferable to provide a roller in place of the guide member 23b for further reducing the friction between the seat belt and the frame.

As described above, since the retractor is disposed near the lower, front, middle-side corner of the seat frame and the seat belt guide member is fixed at a position near the other corner of the seat frame, the driver or passenger can take the seat comfortably without feeling the presence of the retractor and the other passenger taking the rear seat can freely stretch his legs under the front seat.

It will be understood by those skilled in the art that the foregoing description is in terms of preferred embodiments of the present invention wherein various changes and modifications may be made without departing from the scope of the invention, as is set forth in the appended claims.

**Claims**

1. An automotive vehicle seat provided with a seat belt device comprising a seat belt (21) for protecting a driver or passenger from injury caused by a shock, a retractor (17, 17a) for pulling said seat belt thereinto when said seat belt is not used, said retractor being arranged inside of the contour of the seat frame (15) of the seat, and a seat belt guide member (23, 23a) for guiding said seat belt reeled out of said retractor so as to be brought into contact with the body of the occupant under appropriate tension, characterized in that said retractor (17, 17a) is housed near a lower, front, middle-side corner of the seat frame, and that said belt guide member (23, 23a) is formed near another front or middle-side corner of the seat frame.

2. An automotive vehicle seat as set forth in claim 1, characterized in that said seat belt guide member (23) is disposed near the rear, middle-side seat corner.

3. An automotive vehicle seat as set forth in claim 1, characterized in that said seat belt guide member (23a) is disposed near the front, outer-side seat corner.

4. An automotive vehicle seat as set forth in claim 1, characterized in that said belt guide member (23) is provided with a skew guide slot (23a) so as to guide said seat belt in the appropriate orientation.

5. An automotive vehicle seat as set forth in claim 4, characterized in that a slot-shaped grommet-type guide member (23b) is attached to the slot (23a) of said guide member (23) to prevent said seat belt from being displaced from said guide member (23).

## Revendications

1. Siège de véhicule automobile pourvu d'un dispositif formant ceinture de siège comprenant une ceinture de siège (21) pour protéger un conducteur ou un passager d'une blessure provoquée par un choc, un rétracteur (17, 17a) pour y tirer ladite ceinture de siège lorsque ladite ceinture de siège n'est pas utilisée, ledit rétracteur étant agencé à l'intérieur du contour de l'ossature de siège (15) du siège, et un organe de guidage (23, 23a) de la ceinture du siège pour guider ladite ceinture du siège déroulée dudit rétracteur afin qu'elle soit amenée en contact avec le corps de l'occupant sous une tension appropriée, caractérisé en ce que ledit rétracteur (17, 17a) est arbrité à proximité d'un coin inférieur avant du côté du milieu de l'ossature du siège et en ce que ledit organe de guidage de la ceinture (23, 23a) est formé à proximité d'un autre coin avant ou du côté du milieu de l'ossature du siège.

2. Siège de véhicule automobile selon la revendication 1 caractérisé en ce que ledit organe de guidage (23) de la ceinture du siège est disposé à proximité du coin arrière du côté du milieu du siège.

3. Siège pour véhicule automobile selon la revendication 1 caractérisé en ce que ledit organe de guidage de la ceinture du siège (23a) est disposé à proximité du coin avant, du côté externe du siège.

4. Siège pour véhicule automobile selon la revendication 1 caractérisé en ce que ledit organe de guidage de la ceinture (23) est pourvu d'une fente oblique de guidage (23a) afin de guider ladite ceinture de siège à l'orientation appropriée.

5. Siège de véhicule automobile selon la revendication 4 caractérisé en ce qu'un organe de guidage (23b) du type rondelle en forme de fente est attaché à la fente (23a) dudit organe de guidage (23) pour empêcher ladite ceinture de siège d'être déplacée dudit organe de guidage (23).

## Patentansprüche

1. Kraftfahrzeugsitz mit einer Sicherheitsgurteinrichtung mit einem Sicherheitsgurt (21) zum Schutz eines Fahrers oder Mitfahrers gegen Verletzungen infolge eines Aufpralls, einer Aufrollvorrichtung (17, 17a) zum Aufrollen des Sicherheitsgurtes, wenn der Sicherheitsgurt nicht benutzt wird, welche Aufrollvorrichtung innerhalb des Umrises des Rahmens (15) des Sitzes angeordnet ist, und einem Sicherheitsgurt-Führungselement (23, 23a) zur Führung des von der Aufrollvorrichtung abgerollten Sicherheitsgurtes, so daß der Sicherheitsgurt unter geeigneter Spannung mit dem Körer des Benutzers in Berührung gebracht wird, dadurch gekennzeichnet, daß die Aufrollvorrichtung (17, 17a) in der Nähe einer unteren, vorderen, innenseitigen Ecke des Rahmens des Sitzes untergebracht ist und daß das Sicherheitsgurt-Führungselement (23, 23a) in der Nähe einer anderen vorderen oder innenseitigen Ecke des Rahmens des Sitzes ausgebildet ist.

2. Kraftfahrzeugsitz nach Anspruch 1, dadurch gekennzeichnet, daß das Sicherheitsgurt-Führungselement (23) in der Nähe der hinteren, innenseitigen Ecke des Sitzes angeordnet ist.

3. Kraftfahrzeugsitz nach Anspruch 1, dadurch gekennzeichnet, daß das Sicherheitsgurt-Führungselement (23a) in der Nähe der vorderen, außenseitigen Ecke des Sitzes angeordnet ist.

4. Kraftfahrzeugsitz nach Anspruch 1, dadurch gekennzeichnet, daß das Sicherheitsgurt-Führungselement (23) mit einem schrägen Führungsschlitz (23a) zur Führung des Sicherheitzgurtes in einer geeigneten Orientierung versehen ist.

5. Kraftfahrzeugsitz nach Anspruch 4, dadurch gekennzeichnet, daß ein schlitzförmiges, ösenartiges Führungselement (23b) an dem Schlitz (23a) des Führungselements (23) angeordnet ist, um eine Verlagerung des Sicherheitsgurtes von dem Sicherheitsgurt-Führungselement (23) zu verhindern.

# FIG.1

# FIG.2

# FIG.3

3

14

23

21

17

1

# FIG.4

B

15

16

17

22

B

21

23

# FIG.5

# FIG.6

# FIG.7